# FASCICULE DE BREVET EUROPEEN

(11) **EP 2 435 301 B1**
(45) Date de publication et mention de la délivrance du brevet: **01.05.2019**
(21) Numéro de dépôt: 10731774.5
(22) Date de dépôt: 28.05.2010
(51) Int. Cl.: B64C 3/18, B29C 70/30, B64C 3/28, B32B 3/06, B29D 99/00, B64C 3/20, B29D 24/00, B64C 3/26

(54) **PROCÉDÉ POUR LA FABRICATION D'UN PANNEAU STRUCTURANT COMPOSITE DE BORD DE FUITE POUR UN ÉLÉMENT D'UN AÉRONEF**
VERFAHREN ZUR HERSTELLUNG EINER VERBUNDSTRUKTURPLATTE FÜR DIE AUSTRITTSKANTE EINES FLUGZEUGELEMENTS
METHOD FOR MANUFACTURING A COMPOSITE STRUCTURING PANEL FOR THE TRAILING EDGE OF AN AIRCRAFT ELEMENT

(30) Priorité: 28.05.2009 FR 0902579; 18.12.2009 FR 0906157
(43) Date de publication de la demande: 04.04.2012
(73) Titulaire: Société Lorraine de Construction Aéronautique (SLCA), 57190 Florange (FR)
(72) Inventeur: REMENE, Didier, F-78530 Buc (FR); MILLEPIED, Denis, F-78114 Magny-les-Hameaux (FR); FRANCISCO, Paulo, F-95870 Bezons (FR); MONTAGNE, Valérian, F-75012 Paris (FR); PACARY, Jean-Luc, F-92360 Meudon La Foret (FR); BERTRAND, Arnaud, F-78920 Ecquevilly (FR)
(74) Mandataire: Gaillarde, Frédéric F. Ch.
(86) Numéro de dépôt international: PCT/FR2010/051040
(87) Numéro de publication internationale: WO 2010/136741

(56) Documents cités:
- EP-A- 1 764 307
- DE-B- 1 275 279
- US-A- 3 219 123
- US-A- 4 657 615
- US-A1- 2001 017 336
- US-A1- 2006 249 626
- US-B1- 6 234 423

## Description

La présente invention se rapporte à un panneau structurant composite pour un bord de fuite d'un élément d'un aéronef.

L'invention se rapporte également à un élément d'aéronef comportant un tel panneau.

Les panneaux composites sont des panneaux utilisés fréquemment en aérospatial car permettant d'alléger considérablement l'aéronef. Un tel panneau composite est connu par exemple du document EP-A-1,764,307.

Certaines parties d'aéronef nécessitent des panneaux structurants assurant une bonne résistance mécanique. On peut citer tout particulièrement les bords de fuite, comme ceux des gouvernes d'avion.

Le document US 6,234,423 divulgue un exemple de procédé de fabrication d'une partie d'aéronef selon l'art antérieur.

Il est couramment utilisé des panneaux structurants composites de type sandwich, comprenant une structure à âme alvéolaire mise entre une peau interne et une peau externe.

Typiquement, la peau interne et la peau externe sont constituées chacune d'un ou plusieurs plis fibreux pré-imprégnés de résine qui est ensuite polymérisée lors d'une étape de cuisson.

D'autres procédés utilisent des plis fibreux secs, c'est-à-dire non pré-imprégnés de résine, la résine étant appliquée ultérieurement lors d'une étape de cuisson au cours de laquelle elle est forcée par aspiration à se diffuser entre les plis fibreux.

Un panneau sandwich composite peut également comprendre plusieurs couches centrales, de même type ou de types différents, les couches centrales pouvant elles-mêmes être séparées par une couche de matériau composite.

Les couches centrales peuvent, par exemple, être de type alvéolaire, mousse ou encore comprendre un ou plusieurs inserts fusibles.

Les panneaux sandwich composites utilisant une âme en nid d'abeille ou mousse, par exemple, aident à réduire la masse des objets tout en conservant ou en augmentant leurs propriétés mécaniques.

Cependant, ce type de panneau n'est généralement pas adapté pour la fabrication de bords de fuite.

En effet, les bords de fuite présentent un rayon de courbure très faible difficile à obtenir avec un panneau sandwich composite.

Par ailleurs, il est important d'avoir une continuité aérodynamique la plus parfaite possible afin de ne pas impacter sur les performances de l'aéronef.

De plus, il existe un besoin pour une fabrication simplifiée d'un panneau composite structurant présentant un bord de fuite.

Un but de la présente invention est donc de fournir un tel panneau présentant une bonne continuité aérodynamique .

Il peut être également souhaitable de limiter au maximum le flambage des peaux du panneau en garantissant une bonne rigidité en flexion et en torsion.

Un but de la présente invention est donc de fournir un panneau permettant de limiter le flambage des peaux et d'améliorer la tenue mécanique structurale tout en étant simple à réaliser.

A cet effet, selon un premier aspect, l'invention a pour objet un procédé selon la revendication 1.

Le panneau produit selon la présente invention permet d'avoir une continuité aérodynamique excellente au niveau du bord de fuite. En effet, le panneau de l'invention est formé d'une seule pièce monobloc. Aucune jonction entre panneaux n'est nécessaire, une telle jonction impacterait sur la performance aérodynamique.

En outre, la présence de raidisseurs transversaux assure une excellente tenue structurale malgré le très faible rayon de courbure au bord du panneau.

Enfin, le panneau étant intégralement réalisé en une seule pièce monobloc, la fabrication de ce dernier en est très simplifiée. En effet, il n'est plus nécessaire d'assembler et de fixer les différents éléments formant le panneau structurant.

Préférentiellement, la peau formant ledit panneau comporte une pluralité de plis dont un ou plusieurs plis intérieurs forment les raidisseurs transversaux ce qui permet d'obtenir un panneau structurant composite qui est très résistant pour absorber un choc sensiblement transverse à la surface supérieure ou inférieure.

Avantageusement, au moins un longeron longitudinal est disposé de sorte que l'axe directeur de chaque longeron longitudinal et l'axe directeur des raidisseurs transversaux ne sont pas colinéaires et le panneau structurant est constitué d'une pièce monobloc formant la surface supérieure, la surface inférieure, le bord de fuite, les raidisseurs transversaux et le ou les longerons longitudinaux.

On entend par « axe directeur », l'axe dirigeant un longeron ou un raidisseur transversal suivant la plus grande dimension de ce dernier.

La présence d'un ou de plusieurs longerons longitudinaux disposés de manière sensiblement perpendiculaire aux raidisseurs transversaux permet de limiter le flambage des peaux supérieure et inférieure et d'améliorer la tenue mécanique structurale du panneau de l'invention dans deux directions sensiblement perpendiculaires du panneau de l'invention. En outre, le panneau de l'invention étant entièrement réalisé de manière monobloc présente une fabrication simple à réaliser.

Préférentiellement, l'axe directeur de chaque longeron longitudinal et l'axe directeur des raidisseurs transversaux sont sensiblement perpendiculaires.

Préférentiellement, au moins un longeron longitudinal est disposé entre deux raidisseurs transversaux ce qui permet de renforcer localement la tenue structurale du panneau de l'invention.

Préférentiellement, la peau formant ledit panneau comporte une pluralité de plis dont un ou plusieurs plis intérieurs forment le ou les longerons longitudinaux.

Avantageusement, le panneau produit selon l'invention comporte des plis de renfort entre les plis intérieurs, ce qui permet de renforcer le ou les longerons longitudinaux et/ ou les raidisseurs transversaux.

Selon l'invention le procédé de fabrication d'un panneau est caractérisé en ce qu'il comporte :
- une première étape (A) dans laquelle on dépose des noyaux, entourés chacun au moins partiellement par une peau de drapage, sur une peau de base sur une longueur de cette dernière appropriée pour permettre de replier la peau de base sur elle-même ;
- une deuxième étape (B) dans laquelle on replie la peau de base sur les noyaux drapés ;
- une troisième étape (C) dans laquelle on polymérise le panneau ainsi obtenu de sorte à intégrer les plis du drapage dans la peau de base pour former les raidisseurs transversaux ; et
- une quatrième étape (D) dans laquelle on retire les noyaux afin d'obtenir le panneau structurant.

Préférentiellement, les noyaux ont une hauteur décroissante suivant la longueur desdits noyaux ce qui permet d'avoir un excellent profil aérodynamique du panneau structurant.

Avantageusement, chaque noyau est drapé par une peau de drapage de type monolithique présentant une pluralité de plis ce qui permet d'obtenir une bonne fusion entre les différents éléments constituant le panneau de l'invention.

Avantageusement, le procédé de fabrication d'un panneau de l'invention comporte :
- une première étape (A) dans laquelle on dépose des premiers noyaux et au moins un deuxième noyau, entourés chacun au moins partiellement par une peau de drapage sur une peau de base, suivant deux directions non colinéaires, de sorte que ladite peau de base puisse être repliée sur elle-même ;
- une deuxième étape (B) dans laquelle on replie la peau de base sur les premiers et deuxième(s) noyaux drapés ;
- une troisième étape (C) dans laquelle on polymérise le panneau ainsi obtenu de sorte à intégrer les plis du drapage dans la peau de base pour former les raidisseurs transversaux et le ou les longerons longitudinaux ; et
- une quatrième étape (D) dans laquelle on retire les premiers noyaux et le ou les deuxièmes noyaux afin d'obtenir le panneau structurant.

Préférentiellement, le ou les deuxièmes noyaux ont une hauteur décroissante suivant la section transversale desdits noyaux ce qui permet une bonne ligne aérodynamique du panneau de l'invention.

Préférentiellement, chaque premier et deuxième noyaux sont drapés par une peau de drapage de type monolithique présentant une pluralité de plis.

Préférentiellement, dans l'étape A, on dispose des premiers noyaux avant le bord de fuite de sorte à former un espace entre le bord de fuite et les premiers noyaux, espace dans lequel on installe un ou plusieurs deuxièmes noyaux sensiblement parallèles au bord de fuite.

Un élément d'aéronef peut comporter au moins un panneau structurant obtenu selon un procédé de l'invention.

Préférentiellement, l'élément est une gouverne d'avion.

L'invention sera davantage comprise à la lecture de la description non limitative qui va suivre, faite en référence aux figures ci-annexées.
- figure 1 est une vue en perspective d'un panneau selon un premier mode de réalisation de la présente invention,
- figure 2 est une vue de face agrandie du mode de réalisation de la figure 1, et
- figures 3 à 5 sont des vues en perspective du procédé de fabrication d'un panneau de la figure 1 ;
- figure 6 est une vue en perspective d'un panneau selon un second mode de réalisation de la présente invention,
- figure 7 est une vue de dessous en perspective d'une variante du mode de réalisation du panneau de la figure 6,

Le panneau 1 comporte une surface supérieure 3, une surface inférieure 5 et un bord 7 reliant les surfaces supérieure 3 et inférieure 5. Le panneau 1 définit un bord de fuite 7 directement obtenu durant la cuisson du panneau 1 de l'invention ce qui simplifie la fabrication de ce dernier.

La surface supérieure 3 et la surface inférieure 5 sont reliées par des raidisseurs transversaux 9 intégrés à ces dernières.

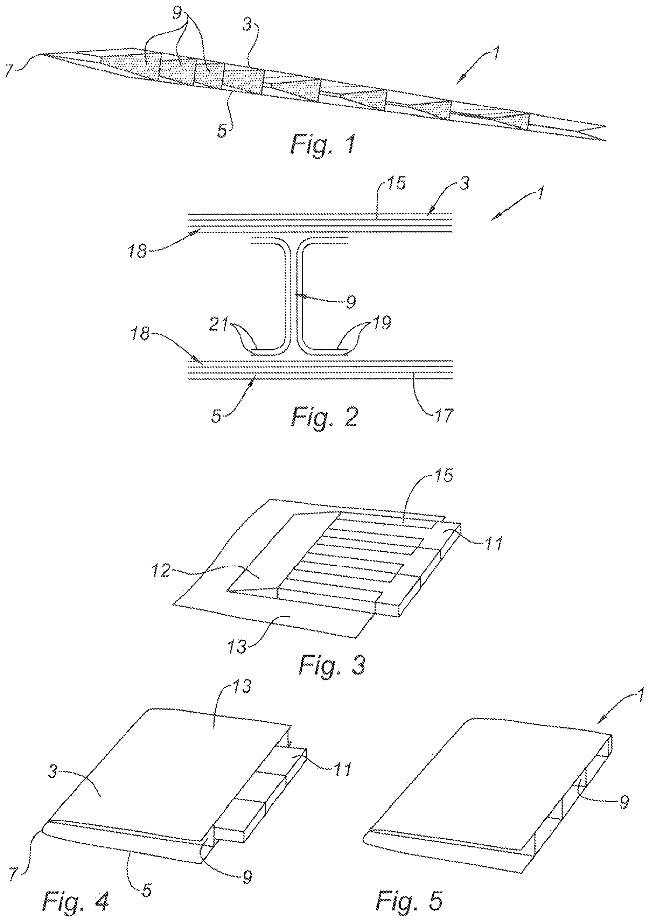

En d'autres termes, dans un premier mode de réalisation de la présente invention illustré sur la figure 1, le panneau de l'invention 1 est constitué d'une unique pièce monobloc formant la surface supérieure 3, la surface inférieure 5, le bord 7 ainsi que les raidisseurs transversaux 9.

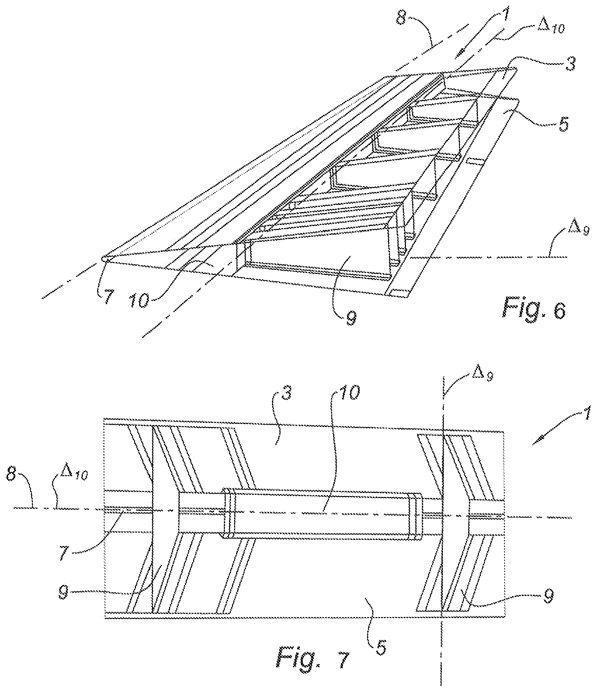

Dans un second mode de réalisation de la présente invention illustré sur les figure 6 et 7, la surface supérieure 3 et la surface inférieure 5 sont reliées par des raidisseurs transversaux 9 ainsi qu'au moins un ou plusieurs longerons longitudinaux 10, lesdits raidisseurs 9 et ledit ou lesdits longerons 10 étant intégrés à ces dernières.

Dans ce second mode de réalisation, au moins un longeron longitudinal 10 est disposé de sorte que l'axe directeur Δ₁₀ de chaque longeron longitudinal 10 et l'axe directeur Δ₉ des raidisseurs transversaux 9 ne sont pas colinéaires. Ainsi, de manière avantageuse, le panneau de l'invention 1 présente une très bonne tenue structurale suivant deux directions non parallèles.

Préférentiellement, l'axe directeur Δ₁₀ de chaque longeron longitudinal 10 et l'axe directeur Δ₉ des raidisseurs transversaux 9 sont sensiblement perpendiculaires.

On entend par « longitudinal », une direction sensiblement colinéaire à l'axe directeur 8 du bord de fuite 7. Comme illustré sur les figures 6 et 7, l'axe directeur 8 du bord de fuite peut être sensiblement colinéaire à l'axe directeur Δ₁₀ de chaque longeron longitudinal 10 et/ou sensiblement perpendiculaire à l'axe directeur Δ₉ des raidisseurs transversaux 9.

Selon une variante non représentée, l'axe directeur Δ₉ des raidisseurs transversaux 9 peut être non colinéaire à l'axe directeur 8 du bord de fuite sans être perpendiculaire à ce dernier. De même, l'axe directeur Δ₁₀ de chaque longeron longitudinal 10 peut être non colinéaire à l'axe directeur 8 du bord de fuite et également non colinéaire de l'axe directeur Δ₉ des raidisseurs transversaux 9.

On entend par « transversal», une direction sensiblement perpendiculaire aux plans formés par la surface supérieure 3 et la surface inférieure 5.

Le ou les longerons longitudinaux 10 sont typiquement placés à l'extrémité des raidisseurs 9 transversaux en regard du bord de fuite 7. Pour ce faire, les raidisseurs transversaux 9 sont placés à une distance non nulle du bord de fuite 7.

Le panneau 1 peut comporter ainsi un unique longeron longitudinal ou, au contraire, une pluralité de longerons longitudinaux. L'utilisation d'une pluralité de longerons 10, notamment placés entre deux raidisseurs transversaux 9 (voir figure 7), permet de limiter de manière locale tout flambage du panneau 1 de l'invention. Ledit longeron 10 présentant alors une longueur au plus égale à l'écartement des deux raidisseurs transversaux 9 suivant l'axe directeur 8.

Typiquement, la longueur d'un longeron longitudinal 10 suivant l'axe directeur Δ₁₀ de ce dernier peut prendre toute valeur inférieure ou égale à la longueur du panneau 1 de l'invention. Dans le cas où le longeron longitudinal 10 n'a pas son axe directeur Δ₁₀ sensiblement parallèle à l'axe directeur 8 du bord de fuite, la longueur dudit longeron 10 peut être supérieure à la longueur du panneau 1 de l'invention sans que ledit longeron 10 ne dépasse dudit panneau 1.

De même, la longueur d'un raidisseur transversal 9 suivant l'axe directeur Δ₉ de ce dernier peut prendre toute valeur inférieure ou égale à la largeur du panneau 1 de l'invention. Dans le cas où le raidisseur transversal 9 n'a pas son axe directeur Δ₉ sensiblement perpendiculaire à l'axe directeur 8 du bord de fuite, la longueur dudit raidisseur 9 peut être supérieure à la largeur du panneau 1 de l'invention sans que ledit raidisseur 9 ne dépasse dudit panneau 1.

Par ailleurs, dans ce second mode de réalisation, le panneau de l'invention 1 est constitué d'une unique pièce monobloc formant la surface supérieure 3, la surface inférieure 5, le bord 7 ainsi que les raidisseurs transversaux 9 et le ou les longerons 10.

Dans les deux modes de réalisation des figures 1, 6 et 7, le panneau 1 de l'invention est constitué d'une unique peau monolithique.

La peau monolithique peut être réalisée en tout type de tissus ou fibres adaptés et connus de l'homme du métier qui peuvent être imprégnés de résine époxy ou autre. A cet effet, on peut citer des fibres de carbone, de verre ou de kevlar®.

Avantageusement, l'unique peau monolithique est formée d'une pluralité de plis 18 fusionnés les uns sur les autres par l'intermédiaire d'une résine polymérisable, telle que la résine époxy, disposée entre les plis 18.

Plus précisément, la partie supérieure 15 de la peau formant la surface supérieure 3 et la partie inférieure 17 de la peau formant la surface inférieure 5 peuvent comprendre une pluralité de plis 18 dont les plis intérieurs 19, 21 disposés vers l'intérieur du panneau 1 peuvent s'étendre continûment le long dudit panneau 1 à partir d'une section droite jusqu'à une deuxième section droite.

Dans le premier mode de réalisation des figures 1 et 2, le fait que les raidisseurs transversaux 9 soient constitués de plis 18 permet d'obtenir un panneau structurant 1 composite très résistant pour absorber un choc sensiblement transverse à la surface supérieure 3 ou inférieure 5.

Dans le second mode de réalisation des figures 6 et 7, le fait que les raidisseurs transversaux 9 et le ou les longerons 10 soient constitués de plis 18 permet d'obtenir un panneau structurant 1 composite également très résistant pour absorber un choc sensiblement transverse à la surface supérieure 3 ou inférieure 5.

En effet, le panneau 1 de l'invention est avantageusement renforcé mécaniquement suivant deux directions non colinéaires, notamment sensiblement perpendiculaires, par rapport au plan formé par le panneau 1 de l'invention.

Comme illustré sur la figure 2, les plis intérieurs 19 peuvent s'étendre continûment depuis la partie inférieure 17, traversent le panneau 1 de manière sensiblement perpendiculaire à la surface inférieure 5 en venant constituer une partie des plis d'un raidisseur transversal 9 ou d'un longeron 10 le cas échéant et avant de s'étendre au niveau de la surface supérieure 3 à nouveau le long de la section droite.

Il en va de même pour les autres plis intérieurs 21 de l'autre section droite.

Ainsi, en fonction du mode de réalisation du panneau, le raidisseur transversal 9 ou le raidisseur transversal 9 et le ou les longerons 10 sont formés par les plis intérieurs 19 et 21 provenant des sections droites.

Bien évidemment, les plis 18 utilisés dans chacun des modes de réalisation de panneaux peuvent être de nature identique ou différente selon les propriétés recherchées.

Comme sorte de plis classiquement utilisés, on peut citer entre autres les fibres de verre, les fibres de carbone et les fibres de kevlar.

Dans le cas où les plis 19, 21 participant aux renforts ne présenteraient pas à eux seuls une tenue suffisante ou devraient être renforcés, on peut notamment coudre la totalité ou une partie de ces plis 19, 21 entre eux. On peut également insérer, entre les plis 19, 21, des plis de renforts, comme des plis de fibres de carbones par exemple, qui peuvent être présents, en fonction du mode de réalisation du panneau, dans les raidisseurs transversaux 9 ou dans les raidisseurs transversaux 9 et/ou dans le ou les longerons 10.

En outre, selon l'invention, le panneau 1 de l'invention est obtenu par un procédé de fabrication comportant :
- une première étape A dans laquelle on dépose des noyaux 11, entourés chacun au moins partiellement par une peau de drapage 15, sur une peau de base 13 sur une longueur de cette dernière appropriée pour permettre de replier la peau de base 13 sur elle-même (figure 3) ;
- une deuxième étape B dans laquelle on replie la peau de base 13 sur les noyaux 11 drapés (figure 4) ;
- une troisième étape C dans laquelle on polymérise le panneau ainsi obtenu de sorte à intégrer les plis du drapage dans la peau de base 13 pour former les raidisseurs transversaux 9 ; et
- une quatrième étape D dans laquelle on retire les noyaux 11 afin d'obtenir le panneau structurant (voir figure 5).

Par la suite, les expressions « entouré au moins partiellement » et « drapé » sont synonymes. Ainsi, le terme « drapage » désigne le fait d'entourer au moins partiellement un noyau.

Par ailleurs, dans une variante de réalisation, le panneau 1 est obtenu par le procédé de fabrication comportant :
- une première étape (A) dans laquelle on dépose des premiers noyaux 11 et au moins un deuxième noyau 12, entourés chacun au moins partiellement par une peau de drapage 15, sur une peau de base 13, suivant deux directions non colinéaires Δ₁₀ et Δ₉, notamment respectivement sur une longueur et sur une largeur de ladite peau de base 13, de sorte que cette dernière puisse être repliée sur elle-même (voir figure 4) ;
- une deuxième étape B dans laquelle on replie la peau de base 13 sur les premiers 11 et deuxième(s) 12 noyaux drapés (figure 5) ;
- une troisième étape C dans laquelle on polymérise le panneau ainsi obtenu de sorte à intégrer les plis du drapage dans la peau de base 13 pour former les raidisseurs transversaux 9 et le ou les longerons 10 ; et
- une quatrième étape D dans laquelle on retire les premiers noyaux 11 et le ou les deuxièmes noyaux 12 afin d'obtenir le panneau structurant (voir figure 6).

Grâce au procédé de l'invention, il est possible d'ajuster le nombre de plis entre deux raidisseurs transversaux 9 et également au niveau du ou des longerons 10, le cas échéant. Il est alors possible d'optimiser la masse du panneau 1 de l'invention tout en garantissant une importante raideur longitudinale et transversale.

En outre, grâce au procédé de l'invention, le panneau 1 est formé d'une seule pièce par fusion de la peau de base 13 repliée sur elle-même et de la peau du drapage.

De plus, le procédé permet d'introduire le nombre de raidisseurs et de longeron(s) le cas échéant, souhaité en fonction de la tenue structurale désirée en augmentant ou en diminuant le nombre de noyaux ou les dimensions de ceux-ci.

En outre, en fonction du mode de réalisation du panneau, le procédé n'impose pas de contrainte pour le positionnement des raidisseurs et celui du ou des longerons le cas échéant. Ils sont placés de sorte à améliorer leur utilité structurelle

Plus particulièrement, dans l'étape A, les premiers noyaux 11 sont entourés chacun au moins partiellement par une peau de drapage 15 sur les cotés latéraux desdits noyaux 11.

Le ou les deuxièmes noyaux 12 sont entourés chacun au moins partiellement par une peau de drapage 15 sur au moins une partie d'un côté longitudinal desdits noyaux 12.

Les noyaux 11 employés dans le premier mode de réalisation du panneau ou les premiers noyaux 11 et le ou les deuxièmes noyaux 12 employés dans le second mode de réalisation du panneau ont une forme appropriée pour former les raidisseurs transversaux 9 ainsi que le ou les longerons 10, le cas échéant. Pour ce faire, ils ont typiquement une section transversale de forme sensiblement triangulaire, rectangulaire, carré, voire trapézoïdale.

Typiquement, des premiers noyaux 11 permettant de former les raidisseurs transversaux 9 sont disposés avant le bord 7 de sorte à former un espace dans lequel on installe un ou des deuxièmes noyaux 12 parallèles au bord 7 permettant de former le ou les longerons 10 (voir figure 4) afin de stopper les raidisseurs suivant les caractéristiques mécaniques recherchées (voir figure 3). Ainsi, il est possible d'avoir un excellent profil aérodynamique du panneau structurant 1.

Avantageusement, les noyaux 11 ont une hauteur décroissante suivant la longueur desdits noyaux 11 de sorte à épouser le faible rayon de courbure du bord 7.

En outre, dans le second mode de réalisation du panneau, le ou les deuxièmes noyaux 12 ont une section transversale avec une hauteur décroissante sur la section transversale du ou desdits deuxièmes noyaux 12 de sorte à épouser le faible rayon de courbure du bord 7. Ainsi, il est possible d'avoir un excellent profil aérodynamique du panneau structurant 1.

Avantageusement, dans le premier mode de réalisation du panneau, les noyaux 11 sont placés sur la peau de base 13 sur une longueur de cette dernière appropriée pour permettre de replier la peau de base 13 sur elle-même. Ainsi, les noyaux 11 peuvent être placés sur une distance inférieure à la moitié de la longueur de ladite peau 13 ce qui permet d'avoir une surface supérieure 3 de longueur sensiblement égale à celle de la surface inférieure 5.

Dans le second mode de réalisation du panneau, ce sont les premiers 11 et deuxième(s) 12 noyaux qui sont placés sur la peau de base 13 sur une longueur de cette dernière appropriée pour permettre de replier la peau de base 13 sur elle-même. Ainsi, les premiers 11 et deuxième(s) 12 noyaux peuvent être placés sur une distance inférieure à la moitié de la longueur de ladite peau 13 ce qui permet d'avoir une surface supérieure 3 de longueur sensiblement égale à celle de la surface inférieure 5.

Le drapage est effectué typiquement avant la pose des noyaux 11 sur la peau de base 13 ou des premiers 11 et deuxième(s) 12 noyaux sur la peau de base 13. Le drapage est alors réalisé par une peau de drapage de type monolithique 15 présentant une pluralité de plis, par exemple deux ou trois plis de sorte à obtenir un drapage optimum. Typiquement, la peau de drapage 15 comporte un nombre de plis inférieur à celui de la peau de base 13

La peau de base 13 peut comprendre un nombre de plis supérieur à 2, égal à 3, à 5 ou plus.

La peau de drapage 15 peut comprendre un nombre de plis supérieur à 2, égal à 3, à 5 ou plus.

Les plis de la peau de base 13 et de la peau de drapage 15 sont imprégnés de résine polymérisable telle que la résine époxy.

Dans l'étape B, on replie la peau de base 13 sur elle-même par tout moyen connu de l'homme du métier de sorte à former un bord 7, une surface supérieure 3 et une surface inférieure 5.

Typiquement, la polymérisation de l'étape C est réalisée par chauffage à une température de cuisson. La température de cuisson dépend du type de résine utilisée pour réaliser le panneau monobloc 1 de l'invention. A titre d'exemple, si la peau de base 13 et/ou de drapage 15 est (sont) réalisée(s) avec de la résine époxy, la température de cuisson est comprise entre 60°C et 200°C.

Cette étape est typiquement réalisée dans un autoclave ou tout moyen chauffant.

Typiquement, la peau de base 13 et la peau de drapage 15 comprennent des plis à base de fibres telles que les fibres de verre, les fibres de carbone et les fibres de kevlar, lesdites fibres étant imprégnées de résine polymérisable lors de la cuisson du matériau.

Dans l'étape D, selon le mode de réalisation du panneau, on retire les noyaux 11 ou les premiers noyaux 11 et le ou les deuxièmes noyaux 12 du panneau ainsi formés par tout moyen connu de l'homme du métier, notamment par extracteurs manipulés manuellement ou automatiquement. Le retrait des noyaux est typiquement réalisé selon une direction sensiblement colinéaire à la direction que prennent les raidisseurs transversaux 9 ou du ou des longerons 10, le cas échéant.

Le panneau 1 de l'invention peut être avantageusement utilisé dans un élément d'un aéronef, tel qu'une gouverne d'avion.

## Revendications

1. Procédé de fabrication d'un panneau (1) structurant (1) composite de bord de fuite pour un élément d'un aéronef présentant :
- une surface supérieure (3) ;
- une surface inférieure (5) ;
- un bord de fuite (7) reliant lesdites surfaces supérieure (3) et inférieure (5), la surface supérieure (3) et la surface inférieure (5) étant reliées par des raidisseurs transversaux (9), , **caractérisé en ce qu'**il comporte :
- une première étape (A) dans laquelle on dépose des noyaux (11), entourés chacun au moins partiellement par une peau de drapage (15), sur une peau de base (13) sur une longueur de cette dernière appropriée pour permettre de replier la peau de base (13) sur elle-même ;
- une deuxième étape (B) dans laquelle on replie la peau de base (13) sur les noyaux (11) drapés ;
- une troisième étape (C) dans laquelle on polymérise le panneau ainsi obtenu de sorte à intégrer les plis du drapage dans la peau de base (13) pour former les raidisseurs transversaux (9) ; et
- une quatrième étape (D) dans laquelle on retire les noyaux (11) afin d'obtenir le panneau structurant.

2. Procédé selon la revendication 1 **caractérisé en ce que** les noyaux (11) ont une hauteur décroissante suivant la longueur desdits noyaux (11).

3. Procédé selon la revendication1 **caractérisé en ce que** chaque noyau est drapé par une peau de drapage de type monolithique présentant une pluralité de plis.

4. Procédé selon l'une quelconque des revendications 1 à 3, **caractérisé en ce que**, dans l'étape A, on dispose des premiers noyaux (11) avant le bord de fuite (7) de sorte à former un espace entre le bord de fuite (7) et les premiers noyaux (11), espace dans lequel on installe un ou plusieurs deuxièmes noyaux (12) sensiblement parallèles au bord de fuite (7).

5. Procédé selon la revendication 4 **caractérisé en ce qu'**il comporte :
- une première étape (A) dans laquelle on dépose des premiers noyaux (11) et au moins un deuxième noyau (12), entourés chacun au moins partiellement par une peau de drapage (15) sur une peau de base (13), suivant deux directions non colinéaires (Δ₁₀, Δ₉), de sorte que ladite peau de base 13 puisse être repliée sur elle-même ;
- une deuxième étape (B) dans laquelle on replie la peau de base (13) sur les premiers (11) et deuxième(s) (12) noyaux drapés ;
- une troisième étape (C) dans laquelle on polymérise le panneau ainsi obtenu de sorte à intégrer les plis du drapage dans la peau de base (13) pour former les raidisseurs transversaux (9) et un ou des longerons longitudinaux (10) ; et
- une quatrième étape (D) dans laquelle on retire les premiers noyaux (11) et le ou les deuxièmes noyaux (12) afin d'obtenir le panneau structurant (1).

6. Procédé selon la revendication 5 **caractérisé en ce que** les deux directions non colinéaires (Δ₁₀, Δ₉) sont sensiblement perpendiculaires.

7. Procédé selon la revendication 5, **caractérisé en ce que** le ou les deuxièmes noyaux (12) ont une hauteur décroissante suivant la section transversale desdits noyaux (12).

8. Procédé selon la revendication 5, **caractérisé en ce que** chaque premier (11) et deuxième (12) noyaux sont drapés par une peau de drapage (15) de type monolithique présentant une pluralité de plis.

## Patentansprüche

1. Verfahren zur Herstellung einer strukturierenden (1) Verbundplatte (1) einer Hinterkante für ein Element eines Luftfahrzeugs, die Folgendes aufweist:
- eine obere Oberfläche (3);
- eine untere Oberfläche (5);
- eine Hinterkante (7), die die obere (3) und untere Oberfläche (5) verbindet, wobei die obere Oberfläche (3) und die untere Oberfläche (5) durch Querversteifer (9) verbunden sind, **dadurch gekennzeichnet, dass** es Folgendes umfasst:
- einen ersten Schritt (A), bei dem Kerne (11), die jeweils mindestens teilweise von einer Abdeckungsschicht (15) umgeben sind, auf einer Basisschicht (13) auf einer Länge dieser Letzteren, die geeignet ist, um es zu erlauben, die Basisschicht (13) auf sich selbst zurückzufalten, abgelegt werden;
- einen zweiten Schritt (B), bei dem die Basisschicht (13) auf die abgedeckten Kerne (11) zurückgefaltet wird;
- einen dritten Schritt (C), bei dem die derart erhaltene Platte derart polymerisiert wird, dass die Abdeckungsfalten in der Basisschicht (13) integriert werden, um die Querversteifer (9) zu bilden; und
- einen vierten Schritt (D), bei dem die Kerne (11) entfernt werden, um die strukturierende Platte zu erhalten.

2. Verfahren nach Anspruch 1, **dadurch gekennzeichnet, dass** die Kerne (11) entlang der Länge der Kerne (11) eine abnehmende Höhe aufweisen.

3. Verfahren nach Anspruch 1, **dadurch gekennzeichnet, dass** jeder Kern durch eine Abdeckschicht vom monolithischen Typ, die eine Vielzahl von Falten aufweist, abgedeckt ist.

4. Verfahren nach einem der Ansprüche 1 bis 3, **dadurch gekennzeichnet, dass** bei dem Schritt A erste Kerne (11) vor der Hinterkante (7) derart angeordnet werden, dass zwischen der Hinterkante (7) und den ersten Kernen (11) ein Raum gebildet wird, wobei in dem Raum ein oder mehrere zweite Kerne (12), die im Wesentlichen zu der Hinterkante (7) parallel sind, installiert werden.

5. Verfahren nach Anspruch 4, **dadurch gekennzeichnet, dass** es Folgendes umfasst:
- einen ersten Schritt (A), bei dem erste Kerne (11) und mindestens ein zweiter Kern (12), die jeweils mindestens teilweise von einer Abdeckschicht (15) auf einer Basisschicht (13) entlang zweier nicht kollinearer Richtungen (Δ₁₀, Δ₉) derart umgeben sind, dass die Basisschicht (13) auf sich selbst zurückgefaltet werden kann;
- einen zweiten Schritt (B), bei dem die Basisschicht (13) auf die ersten (11) und den (die) zweiten abgedeckten Kern(e) (12) zurückgefaltet wird;
- einen dritten Schritt (C), bei dem die derart erhaltene Platte derart polymerisiert wird, dass die Falten der Abdeckung in der Basisschicht (13) integriert werden, um die Querversteifer (9) und einen oder mehrere Längsträger (10) zu bilden; und
- einen vierten Schritt (D), bei dem die ersten Kerne (11) und der oder die zweiten Kerne (12) entfernt werden, um die strukturierende Platte (1) zu erhalten.

6. Verfahren nach Anspruch 5, **dadurch gekennzeichnet, dass** die zwei nicht kollinearen Richtungen (Δ₁₀, Δ₉) im Wesentlichen senkrecht sind.

7. Verfahren nach Anspruch 5, **dadurch gekennzeichnet, dass** der oder die zweiten Kerne (12) entlang des Querschnitts der Kerne (12) eine abnehmende Höhe aufweisen.

8. Verfahren nach Anspruch 5, **dadurch gekennzeichnet, dass** jeder erste (11) und zweite (12) Kern von einer Abdeckschicht (15) vom monolithischen Typ, die eine Vielzahl von Falten aufweist, abgedeckt ist.

## Claims

1. A method for manufacturing a composite structuring panel (1) of a trailing edge for an element of an aircraft having:
- an upper surface (3);
- a lower surface (5);
- a trailing edge (7) connecting said upper (3) and lower (5) surfaces, the upper surface (3) and the lower surface (5) being connected by transverse stiffeners (9), **characterized in that** it includes:
∘ a first step (A) in which cores (11), each at least partially surrounded by a drape-molding skin (15), are deposited on a base skin (13) over a length of the latter which is appropriate to enable folding of the base skin (13) over itself;
∘ a second step (B) in which the base skin (13) is folded over the drape-molded cores (11),
∘ a third step (C) in which the panel thus obtained is polymerized so as to integrate the plies of the drape-molding into the base skin (13) to form the transverse stiffeners (9); and
∘ a fourth step (D) in which the cores (11) are removed in order to obtain the structuring panel.

2. The manufacturing method according to claim 1, **characterized in that** the cores (11) have a decreasing height along the length of said cores (11).

3. The manufacturing method according to claim 1, **characterized in that** each core is drape-molded by a monolithic type drape-molding skin having a plurality of plies.

4. The manufacturing method according to any one of claims 1 to 3, **characterized in that**, at step A, first cores (11) are disposed before the trailing edge (7) so as to form a space between the trailing edge (7) and the first cores (11), a space in which one or several second core(s) (12) substantially parallel to the trailing edge (7) are installed.

5. The manufacturing method according to claim 4, **characterized in that** it includes:
- a first step (A) in which first cores (11) and at least one second core (12) are deposited, each at least partially surrounded by a drape-molding skin (15) on a base skin (13), in two non-collinear directions (Δ₁₀, Δ₉), such that said base skin 13 could be folded over itself,
- a second step (B) in which the base skin (13) is folded over the first (11) and second (12) drape-molded cores;
- a third step (C) in which the panel thus obtained is polymerized so as to integrate the plies of the drape-molding into the base skin (13) to form the transverse stiffeners (9) and one or several longitudinal spar(s) (10); and
- a fourth step (D) in which the first cores (11) and the second core(s) (12) are removed in order to obtain the structuring panel (1).

6. The manufacturing method according to claim 5, **characterized in that** the two non-collinear directions (Δ₁₀, Δ₉) are substantially perpendicular.

7. The manufacturing method according to claim 5, **characterized in that** the second core(s) (12) have a decreasing height along the cross-section of said cores (12).

8. The manufacturing method according to claim 5, **characterized in that** each first (11) and second (12) cores are drape-molded by a monolithic type drape-molding skin (15) having a plurality of plies.
